# EUROPEAN PATENT APPLICATION

(11) **EP 2 193 934 A2**
(43) Date of publication of application: **09.06.2010**
(21) Application number: 09177478.6
(22) Date of filing: 30.11.2009
(51) Int. Cl.: B60C 11/00

(54) **Tire with electrically non-conductive tread which contains electrically conductive rubber strip**

(30) Priority: 02.12.2008 US 326261
(71) Applicant: The Goodyear Tire & Rubber Company, Akron, OH 44316-0001 (US)
(72) Inventor: Steiner, Pascal Patrick, L-9233, Diekirch (LU); Weydert, Marc, L-8020, Strassen (LU); Roch, Peter Phelps, L-1933, Luxembourg (LU); Godefroid, Alain Joseph Jose, B-6747, Meix-le-Tige (BE); Helt, Jean-Nicolas Pierre Claude, F-54260, Braumont (FR)
(74) Representative: Kutsch, Bernd

(57) **Abstract**

The invention relates to a tire (1) having tread (2) of a cap/base configuration. The tread contains an electrically conductive rubber strip (4A) in the form of an extension of the tread base rubber layer (4) which extends radially outward from the tread base rubber layer (4) through an electrically resistive tread cap rubber layer (2) to and including its running surface (3) circumferentially around the tread to thereby provide a path of electrical conductivity through the tread cap layer (2) to its running surface. The composite of the electrically non-conductive tread cap rubber layer (2) and the electrically conductive strip (4A) at the running surface of the tire tread have a similar abradability.

## Description

### Field of the Invention

This invention relates to a tire having tread of a cap/base configuration. The tread contains a preferably thin electrically conductive rubber strip in the form of an extension of said tread base rubber layer which extends radially outward from the tread base rubber layer through an electrically resistive tread cap rubber layer to and including its running surface circumferentially around the tread to thereby provide a path of electrical conductivity through the tread cap layer to its running surface. The composite of the electrically non-conductive tread cap rubber layer and electrically conductive strip at the running surface of the tire tread has a uniform abradability.

### Background for the Invention

Vehicular tires are often of a cap/base construction and are sometimes provided with a tread which is electrically resistive. For such tires, an underlying electrically conductive tread base may be provided from which a thin electrically conductive rubber strip extends from the tread base rubber layer through the electrically resistive tread cap rubber layer to its running surface as shown in US-A- 5,942,069. In this manner, a path of electrical conductivity is provided which extends through the electrically resistive tread cap layer to its running surface.

It can readily be envisioned that, as the electrically resistive outer tread cap rubber layer with its running surface wears away by normal use of the tire, the strip of electrically conductive rubber may wear at a rate significantly different from the rate of wear of the tread cap rubber layer. A challenge may thereby be presented of maintaining the path of electrical conductivity through the tread cap rubber layer.

For this invention, the composite of electrically conductive rubber strip and tread cap rubber layer at the running surface of the tread provides a substantially uniform abradability at the running surface of the tire tread which is believed to be a significant departure from past practice.

In the description of this invention, the terms "rubber" and "elastomer" if used herein, are used interchangeably, unless otherwise indicated. The terms "rubber composition", "compounded rubber" and "rubber compound", if used herein, are used interchangeably to refer to "rubber which has been blended or mixed with various ingredients and materials" and such terms are well known to those having skill in the rubber mixing or rubber compounding art. The terms "cure" and "vulcanize" may be used interchangeably unless otherwise indicated.

In the description of this invention, the term "phr" refers to parts of a respective material per 100 parts by weight of rubber, or elastomer.

### Summary and Practice of the Invention

The invention relates to a tire according to claim 1.

Dependent claims refer to preferred embodiments of the invention.

In accordance with a preferred aspect of this invention, a tire is provided having a tread of a cap/base construction comprising:
(A) an electrically resistive or poorly conductive tread cap rubber layer (relative to an underlying tread base rubber layer) having an outer running surface (running surface intended to be ground-contacting),
(B) an electrically conductive or good conducting rubber tread base layer (relative to said tread cap rubber layer) underlying said tread cap layer, and
(C) a preferably thin, relatively electrically conductive (relative to said tread cap rubber layer), rubber strip as a part of the tread base rubber layer which extends radially outward from said tread base layer through said electrically resistive tread cap layer to and including its outer running surface circumferentially around the tread to thereby provide a path of electrical conductivity through the tread cap layer to its running surface;
wherein said thin rubber strip extension is unitary with and of the same rubber composition as said tread base rubber layer and is thereby a unitary extension of said tread base rubber layer;
wherein in that composite of electrically conductive rubber strip and tread cap rubber layer at the running surface of the tread has an at least substantially uniform abradability.

In one embodiment of this invention, said tread cap rubber composition contains from 40 to 70 phr of silica and carbon black reinforcing filler comprising:
(A) 20 to 60 phr of silica, preferably synthetic amorphous silica or precipitated silica, and
(B) from zero to 30, alternately from 5 to 30, phr of rubber reinforcing carbon black.

In one embodiment of this invention said tread base rubber composition and its thin rubber strip extension, contains from 40 to 70 phr of silica and carbon black reinforcing filler comprising:
(A) from up to 30 phr of silica, preferably synthetic amorphous silica or precipitated silica, and
(B) 40 to 60 phr of rubber reinforcing carbon black.

Representative examples of various rubber reinforcing carbon blacks may be found, for example, in The Vanderbilt Rubber Handbook (1978), Pages 408 through 428, and particularly Page 417 of which their properties are reported in terms of Iodine value, g/kg, (ASTM D1510) and dibutylphthalate (DBP) value, cc/100g, (ASTM D2414).

Representative examples of such reported rubber reinforcing carbon blacks are, for example, N110, N121, N234, and N347 which are ASTM designations.

Preferably, said tread cap layer rubber composition preferably contains less than 30, alternately less than 25, phr of carbon black reinforcement and said tread base rubber composition and said preferably thin strip rubber composition contains at least 40, alternately at least 45, phr of carbon black reinforcement and preferably at least 10 phr more carbon black reinforcement than said tire cap layer rubber composition.

In practice, said tread cap rubber composition preferably contains amorphous synthetic silica based reinforcement as precipitated silica.

In one aspect of the invention, said tread cap, tread base and rubber strip may be co-extruded together to form an integral tire tread construction so that, therefore, an integral tire tread construction comprises a co-extruded tread cap, tread base and said rubber strip extending from, and a part of, said tread base through said tread cap to the running surface of said tread cap rubber layer.

In one aspect of the invention, one end of said rubber strip extending from said tread base rubber layer through said tread cap rubber layer terminates at, and thereby includes a portion of, said running surface of said tread cap.

In practice, it is preferred that the thickness of said rubber strip is in a range of from 0.5 to 10, alternately from 0.5 to 3, millimeters (mm).

In practice, the electrical conductivities of the tread cap rubber layer and underlying integral and co-extruded tread base layer rubber are largely dependent upon their individual carbon black contents. For example, a rubber composition which contains only 10 phr, and generally less than 30 phr of rubber reinforcing carbon black is conventionally significantly more electrically resistive (significantly less electrically conductive) than a rubber composition which contains at least 35 phr of rubber reinforcing carbon black. Such phenomenon is understood to be well known to those having skill in such art.

In the practice of this invention, said tread cap rubber composition which contains silica reinforcement (e.g. precipitated silica) may preferably contain a coupling agent as having a moiety reactive with hydroxyl groups (e.g. silanol groups) contained on the surface of the silica (precipitated silica) and another different moiety interactive with the diene-based elastomer(s).

The forming of the tire tread is contemplated to be by conventional means such as, for example, by extrusion of rubber composition to provide a shaped, unvulcanized rubber tire tread. Such forming of a tire tread is well known to those having skill in such art.

It is understood that the tire, as a manufactured article, is prepared by shaping and sulfur curing the assembly of its components at an elevated temperature (e.g. 140°C to 180°C) and elevated pressure in a suitable mold.

The diene-based elastomers for the tire tread rubber composition of this invention, are, for example, homopolymers and copolymers of at least one conjugated diene such as, for example, isoprene and/or 1,3-butadiene and copolymers of at least one conjugated diene, such as for example, isoprene and/or 1,3-butadiene, and a vinyl aromatic compound such as styrene or alphamethyl styrene, preferably styrene.

Representative of such diene-based elastomers are, for example, elastomers comprised of cis 1,4-polyisoprene (natural and synthetic), cis 1,4-polybutadiene, high vinyl polybutadiene having a vinyl 1,2-content in a range of 35 to 90 percent, isoprene/butadiene copolymer elastomers, styrene/butadiene copolymer elastomers (organic solvent solution polymerization formed or prepared and aqueous emulsion polymerization formed or prepared), styrene/isoprene copolymer elastomers, and styrene/isoprene/butadiene terpolymer elastomers.

It is readily understood by those having skill in the art that the rubber composition would be compounded by methods generally known in the rubber compounding art.

### Brief Description of the Accompanying Drawing

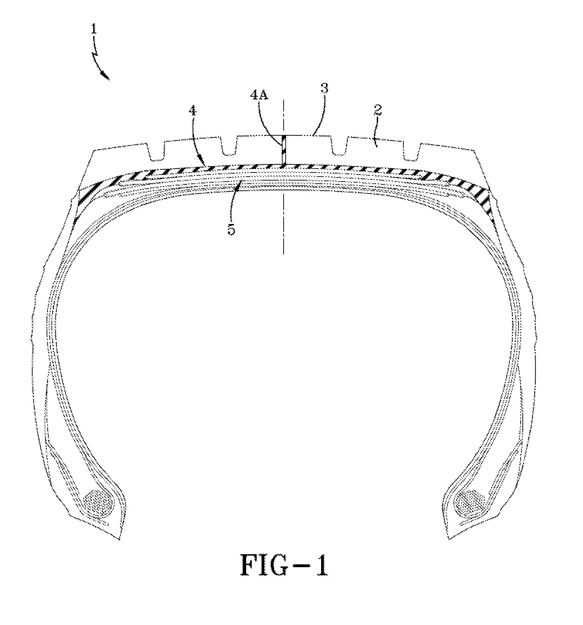

Figure 1 is provided to further illustrate the invention. For FIG 1 a cross section of a tire is provided which illustrates a tread composed of an electrically resistive outer tread rubber cap layer with the tread's running surface and an underlying electrically conductive tread base rubber layer which contains an extension in a form of a thin electrically conductive rubber strip which extends radially outward from the tread base rubber layer through the tread cap rubber layer to and including a portion of the tread running surface. The rubber strip thereby provides a path of electrical conductivity from the tread base rubber layer through the electrically resistive tread cap rubber layer to and including a portion of the tread's running surface.

### The Drawing

In FIG 1 a cross section of a tire 1 is depicted with a tread 2 of a cap/base construction composed of an outer electrically resistive tread cap rubber layer 3 and an underlying electrically conductive tread base rubber layer 4 which contains an extension in a form of a thin rubber strip 4A which extends radially outward from the tread base rubber layer 4 through the tread cap rubber layer 3 to the running surface 5, and extends circumferentially around the periphery of the tread cap rubber layer 3 of the tread 2.

The thin rubber strip 4A is therefore unitary with and is of the same rubber composition of the tread base rubber layer 4 and thereby provides a path of electrical conductivity from the tread base rubber layer 4 to the tread running surface 5.

The composite of said tread cap rubber layer 3 and said thin rubber strip 4A at the tread running surface 5 has a substantially uniform abradability.

The following Example is present to further illustrate the invention. The parts and percentages are by weight unless otherwise indicated.

### EXAMPLE I

Rubber samples are shown to illustrate rubber compositions for a tire tread of a cap/base construction composed of an outer tread cap rubber layer with a tread running surface and an underlying tread base rubber layer with extension in a form of a thin rubber strip which extends through the tread cap rubber layer to and including a portion of its running surface in the sense of the FIG 1 drawing.

Rubber Sample A is presented to illustrate a rubber composition for said tread cap rubber layer.

Rubber Sample B is presented to illustrate a rubber composition for said tread base rubber layer which therefore includes its thin rubber strip extension.

Table 1 illustrates the rubber compositions for Samples A and B.

**Table 1**

| | **Tread Cap** | **Tread Base and** **Conductive Strip** |
|---|---|---|
| **First Non-Productive Mixing Step** **(Mixed to about 160°C)** | A | B |
| Natural cis 1,4-polyisoprene rubber¹ | 80 | 80 |
| Cis 1,4-polybutadiene rubber² | 20 | 20 |
| Carbon black, N121³ | 25 | 0 |
| Carbon black, N347⁴ | 0 | 50 |
| Precipitated silica⁵ | 25 | 0 |
| Silica coupling agent⁶ | 3 | 0 |
| Rubber processing oil | 0 | 2 |
| Fatty acid⁷ | 3 | 3 |
| Zinc oxide | 3 | 3 |

| **Productive Mixing Step (Mixed to about 115°C)** | | |
|---|---|---|
| Sulfur | 1.5 | 1.5 |
| Accelerator(s)⁸ | 1.6 | 1.5 |

| | | |
|---|---|---|
| ¹Natural cis 1,4-polyisorene rubber having a cis 1,4-content of at least 96 percent and a Tg of -65 °C. ²As Budene 1207™ from The Goodyear Tire & Rubber Company having a cis 1,4 content of at least 96 percent and a Tg of -100°C. ³N121, a rubber reinforcing carbon black, ASTM designation ⁴N347, a rubber reinforcing carbon black, ASTM designation ⁵Precipitated silica as Zeosil 1165MP™ from the Rhodia Company ⁶Composite from Degussa-Hulls comprised of a coupling agent as Si69™, a bis-3(triethoxysilylpropyl) polysulfide containing an average of from 3.4 to 3.8 connecting sulfur atoms in its polysulfidic bridge, which may sometimes be referred to as a tetrasulfide, on a carbon black carrier in a 50/50 weight ratio and reported in the Table as the composite ⁷Primarily stearic acid (at least 90 percent by weight stearic acid) which also contains oleic and linoleic acids ⁸Sulfenamide based sulfur cure accelerator | | |

The following Table 2 illustrates cure behavior and various physical properties of rubber composition Sample A and Sample B.

**Table 2**

| | **Samples** | |
|---|---|---|
| **Properties** | **Tread Cap A** | **Tread Base B** |
| **Stress-strain** | | |
| Tensile strength (MPa) | greater than 22 | greater than 22 |
| Elongation at break (%) | 480 | 500 |
| 300% modulus (MPa) | 14.5 | 13 |

| **Shore A Hardness** | | |
|---|---|---|
| 100°C | 66 | 63 |

| **Rebound, Hot** | | |
|---|---|---|
| 100°C | 75 | 71 |

A composite of rubber Samples A and B is prepared which has a exposed surface composed of a circular rubber composition of electrically conductive rubber Sample B surrounded on its sides by electrically resistive rubber Sample A.

The composite is submitted to an abrasion test (DIN 53516) and it was observed that the abradability of the surface of the composite was substantially the same across the surface of the composite (substantially uniform abradability).

It is therefore concluded that for a tire of a configuration similar to FIG 1, the composite of tread base extension (rubber Sample B) and the tread cap rubber layer (rubber Sample A) at the running surface of the tire tread presents the tread running surface with substantially the same abradability across the running surface of the tire tread (a substantially uniform abradability).

Substantially uniform abradability accordingly shall mean in this application and in the claims that in an abrasion test according to DIN 53516 the abradability of the tread cap rubber layer 2 is the same as the abradability of the rubber composition of the strip 4A or not more than ± 20%, preferably not more than ± 10%, most preferably not more than ± 5% different from the abradability of this strip rubber composition.

## Claims

1. A tire having a tread of a cap/base construction comprising:
(A) an electrically resistive or poorly conductive rubber tread cap layer (2) having an outer running surface (3);
(B) an electrically conductive or electrically good conducting rubber tread base layer (4) underlying said tread cap layer (2); and
(C) a, relative to said tread cap rubber layer (2), relatively electrically conductive rubber strip (4A) as a part of the tread base rubber layer (4), wherein the strip (4A) extends radially outward from the tread base layer (4) through the tread cap layer (2) to the outer running surface (3) of the tread cap layer (4), and wherein the thin rubber strip (4A) is unitary with and of the same rubber composition as the tread base rubber layer (4);
**characterized in that** the rubber strip (4A) and the tread cap rubber layer (2) at the running surface (3) of the tread has an at least substantially uniform abradability.

2. The tire of claim 1 wherein the tread base rubber composition (4) and its rubber strip extension (4A) contains from 40 to 110 phr of silica and carbon black reinforcing filler comprising:
(A) from zero to 30 phr of silica, and
(B) 40 to 80 phr of rubber reinforcing carbon black.

3. The tire of claim 1 or 2 wherein the tread cap rubber composition contains from 40 to 110 phr of silica and carbon black reinforcing filler comprising:
(A) 35 to 90 phr of silica, and
(B) 5 to 25 phr of rubber reinforcing carbon black.

4. The tire of at least one of the previous claims wherein the tread cap layer rubber composition contains less than 25 phr of carbon black reinforcement and the tread base rubber composition and the strip rubber composition contains at least 45 phr of carbon black reinforcement.

5. The tire of at least one of the previous claims wherein the thickness of the rubber strip is in a range of 0.5 to 10 millimeters.

6. The tire of claim 5 wherein the thickness of the rubber strip is in a range of from 0.5 to 2 millimeters.

7. The tire of at least one of the previous claims wherein the thickness of the rubber strip is in a range of from 2 to 5 millimeters.

8. The tire of at least one of the previous claims wherein at the running surface of the tire, the rubber strip extends circumferentially around the periphery of the tread cap rubber layer (2).

9. The tire of at least one of the previous claims wherein the abradability of the rubber composition of the tread cap rubber layer (2) in an abrasion test according to DIN 53516 is the same as the abradability of the rubber composition of the strip (4A) or the tread base rubber layer (4) in the abrasion test according to DIN 53516.

10. The tire of at least one of the previous claims wherein the abradability of the rubber composition of the tread cap rubber layer (2) in an abrasion test according to DIN 53516 is not more than 20% smaller or larger than the abradability of the rubber composition of the strip (4A) or the tread base rubber layer (4) in the abrasion test according to DIN 53516.

11. The tire of claim 10 wherein the abradability of the rubber composition of the tread cap rubber layer (2) in the abrasion test according to DIN 53516 is not more than 10% smaller or larger than the abradability of the rubber composition of the strip (4A) or the tread base rubber layer (4) in the abrasion test according to DIN 53516.

12. The tire of claim 10 wherein the abradability of the rubber composition of the tread cap rubber layer (2) in the abrasion test according to DIN 53516 is not more than 5% smaller or larger than the abradability of the rubber composition of the strip (4A) or the tread base rubber layer (4) in the abrasion test according to DIN 53516.
